# FASCICULE DE BREVET EUROPEEN

(11) **EP 2 720 887 B1**
(45) Date de publication et mention de la délivrance du brevet: **13.04.2016**
(21) Numéro de dépôt: 12725377.1
(22) Date de dépôt: 31.05.2012
(51) Int. Cl.: B60C 13/00, B60C 13/02, B29C 33/42

(54) **PNEUMATIQUE COMPORTANT UN MOTIF A FORT CONTRASTE ET DES NERVURES DE PROTECTION DU MOTIF**
REIFEN MIT EINEM MUSTER MIT HOHEM KONTRAST UND RIPPEN ZUM SCHUTZ DES MUSTERS
TYRE COMPRISING A HIGH-CONTRAST PATTERN AND RIBS FOR PROTECTING THE PATTERN

(30) Priorité: 15.06.2011 FR 1155208
(43) Date de publication de la demande: 23.04.2014
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: MUHLHOFF, Olivier, F-63040 Clermont-Ferrand Cedex 9 (FR); DESVIGNES, Jean-Claude, F-63040 Clermont-Ferrand Cedex 9 (FR)
(74) Mandataire: Demaure, Pierre-Yves
(86) Numéro de dépôt international: PCT/EP2012/060201
(87) Numéro de publication internationale: WO 2012/171802

(56) Documents cités:
- EP-A1- 0 522 781
- EP-A2- 0 755 810
- WO-A1-2011/036061

## Description

### DOMAINE DE L'INVENTION

La présente invention concerne un pneumatique pour véhicule automobile comportant un motif à fort contraste.

### ETAT DE LA TECHNIQUE

Les flancs des pneumatiques présentent une grande quantité de motifs destinés d'une part à donner des informations techniques et légales, et d'autre part à permettre aux consommateurs de distinguer l'origine du produit (voir par exemple les documents EP-A-05 227 81 et WO-A-2011036061).

Il est constant d'essayer d'améliorer la visibilité et la lisibilité de ces motifs sur les flancs des pneumatiques.

Le document WO2007/045425 décrit un motif à fort contraste comportant une pluralité de brins faisant saillie à partir d'une surface du pneumatique. Par « brin », on entend un élément filiforme dont la hauteur est au moins égale à 2 fois le diamètre d'un disque de même surface que la section moyenne du brin.

L'effet de ces brins est de « piéger » les rayons lumineux incidents qui rencontrent le motif Ceci permet de donner un aspect plus noir au motif par rapport au reste du flanc du pneumatique. Les brins permettent d'obtenir également un toucher particulièrement agréable, de type « velours ».

Cependant, un motif comportant de tels brins peut être relativement fragile à certaines agressions mécaniques, comme à des frottements avec un trottoir. Sous l'effet de ces frottements, les brins du motif peuvent se désolidariser du pneumatique.

Pour améliorer la résistance mécanique du motif, il a été proposé d'utiliser des lamelles à la place des brins. Les lamelles sont des brins allongés qui présentent une longueur au moins égale à deux fois leur hauteur. Bien que les lamelles résistent mieux aux efforts mécaniques exercés par un trottoir, le motif reste relativement fragile et la différence de contraste entre le motif et le reste du flanc s'atténue assez rapidement au regard de la durée d'utilisation du pneumatique.

Il existe donc un besoin de proposer un motif à fort contraste dont le contraste avec un flanc du pneumatique présente une plus grande pérennité.

### DEFINITIONS

Par « matériau caoutchoutique », on entend un élastomère diénique, c'est-à-dire de manière connue un élastomère issu d'au moins en partie (c'est-à-dire homopolymère ou un copolymère) de monomères diènes (monomères porteurs de deux doubles liaisons carbone-carbone, conjuguées ou non).

Par « pneumatique », on entend tous les types de bandages élastiques soumis à une pression interne ou non.

Par «flanc d'un pneumatique », on entend une partie latérale du pneumatique disposée entre la bande de roulement du pneumatique et un talon de ce pneumatique.

Par « section » d'un brin, on entend une surface obtenue en coupant le brin par un plan perpendiculaire à l'axe de révolution de ce brin.

Par « section moyenne » d'un brin, on entend la moyenne des sections mesurées à intervalles réguliers depuis le pied du brin jusqu'à la tête.

Par « moule », on entend un ensemble d'éléments séparés qui, par rapprochement relatif, permettent de délimiter un espace de moulage toroïdal.

Par « strie » dans un moule, on entend une découpure s'étendant dans la profondeur du moule apte à mouler une nervure sur un pneumatique lors du moulage.

Par « incision », on entend une strie de faible largeur apte à mouler une lamelle sur un pneumatique lors du moulage.

Par « cavité », on entend une découpure apte à mouler un brin sur un pneumatique lors du moulage.

Par « direction radiale », on entend toute direction perpendiculaire à l'axe de rotation du pneumatique.

### RESUME DE L'INVENTION

L'invention concerne un pneumatique en matériau caoutchoutique comprenant un flanc sur lequel est formé au moins un motif faisant contraste par rapport à ce flanc. Le motif comporte une pluralité de brins répartis dans le motif selon une densité au moins égale à cinq brins par millimètre carré (mm²), chaque brin ayant une section moyenne comprise entre 0,003 mm² et 0,06 mm². Le pneumatique comporte sur le flanc au moins deux nervures traversant le motif et entre lesquelles sont présents des brins du motif, lesdites nervures étant distantes l'une de l'autre d'au plus 10 mm, chaque nervure ayant une hauteur d'au moins 0,25 mm et une largeur moyenne d'au moins 0,20 mm. Le motif suit le relief formé par les nervures.

L'invention propose ainsi de prévoir sur le flanc du pneumatique une pluralité de nervures de protection des brins. Des brins du motif sont alors disposés entre les nervures. Lors d'un frottement avec un trottoir, la pression de contact exercée par le trottoir sur le motif va être principalement supportée par les nervures qui sont plus rigides que les brins. Au cours du frottement, les brins du motif vont fléchir et ne vont supporter qu'une faible partie de la pression de contact exercée par le trottoir. La désolidarisation des brins du pneumatique est alors limitée.

Au fur et à mesure de frottements successifs avec des trottoirs, les nervures vont progressivement s'user. Tant qu'il reste des nervures même partiellement usées, les brins du motif disposés entre les nervures sont protégés par ces nervures.

L'invention permet alors de renforcer la solidité du motif. On garantit ainsi une plus grande pérennité du contraste entre le motif et le reste du flanc.

L'invention concerne également un pneumatique en matériau caoutchoutique comprenant un flanc sur lequel est formé au moins un motif faisant contraste par rapport à ce flanc. Le motif est pourvu d'une pluralité de lamelles sensiblement parallèles entre elles, le pas des lamelles dans le motif étant au plus égal à 0,5 mm, chaque lamelle ayant une largeur moyenne comprise entre 0,03 mm et 0,10 mm. Le pneumatique comporte sur le flanc au moins deux nervures traversant le motif et entre lesquelles sont présentes des lamelles du motif, lesdites nervures étant distantes l'une de l'autre d'au plus 10 mm, chaque nervure ayant une hauteur d'au moins 0,25 mm et une largeur moyenne d'au moins 0,20 mm. Le motif suit le relief formé par les nervures.

L'invention propose ainsi de prévoir sur le flanc du pneumatique une pluralité de nervures de protection des lamelles. Des lamelles du motif sont alors disposées entre les nervures. Lors d'un frottement avec un trottoir, la pression de contact exercée par le trottoir sur le motif va être principalement supportée par les nervures qui sont plus rigides que les lamelles. Au cours du frottement, les lamelles du motif vont fléchir et ne vont supporter qu'une faible partie de la pression de contact exercée par le trottoir. La désolidarisation des lamelles du pneumatique est alors limitée.

Au fur et à mesure de frottements successifs avec des trottoirs, les nervures vont progressivement s'user. Tant qu'il reste des nervures même partiellement usées, les lamelles du motif disposées entre les nervures sont protégées par ces nervures.

L'invention permet alors de renforcer la solidité du motif. On garantit ainsi une plus grande pérennité du contraste entre le motif et le reste du flanc.

Dans une variante de réalisation, des extrémités de brins du motif, respectivement de lamelles du motif, s'étendent en hauteur au-delà des nervures.

On améliore ainsi davantage le contraste entre le motif et le reste du flanc du pneumatique.

Dans une variante de réalisation, les nervures ont des parois latérales inclinées faisant un angle compris en valeur absolue entre 30° et 60° avec une direction perpendiculaire au flanc et des brins du motif, respectivement des lamelles du motif, font saillie à partir de ces parois latérales principalement selon la direction perpendiculaire au flanc.

Ainsi, même si la surface sur laquelle des brins, respectivement des lamelles, font saillie est inclinée par rapport au flanc, on s'assure que ces brins, respectivement ces lamelles, restent orienté(e)s perpendiculairement au flanc. La capacité de ces brins, respectivement de ces lamelles, à piéger les rayons lumineux incidents est ainsi maintenue. Cette capacité à piéger les rayons lumineux serait plus limitée si les brins, respectivement les lamelles, s'étendaient, par exemple, perpendiculairement aux parois inclinées des nervures. En effet, dans cette configuration, les brins, respectivement les lamelles, auraient une plus grande surface de réflexion des rayons lumineux incidents. Le motif présenterait alors un contraste moins bon avec le reste du flanc.

En outre, avec un angle différent de 90° entre la direction d'extension des brins, respectivement des lamelles, et les parois inclinées des nervures, la surface d'accroche de ces brins, respectivement de ces lamelles, avec les parois des nervures est élargie par rapport au cas où l'angle entre les brins, respectivement les lamelles, et les parois inclinées serait égal à 90°. De cette manière, on rend plus rigide la base des brins, respectivement des lamelles, et on rend moins facile leur désolidarisation du pneumatique.

Dans une variante de réalisation, les nervures sont orientées sur le flanc selon une direction radiale, c'est-à-dire que chaque nervure est contenue dans un plan passant par l'axe de rotation du pneumatique.

Lorsque le pneumatique frotte contre un trottoir, les efforts de frottement du trottoir sur le flanc sont majoritairement dirigés selon une direction radiale. En orientant les nervures selon cette direction radiale, on optimise la capacité de ces nervures à supporter les efforts de frottement avec le trottoir et on protège mieux les brins du motif, respectivement les lamelles du motif.

### BREVE DESCRIPTION DES DESSINS

D'autres caractéristiques et avantages de l'invention ressortiront de la description suivante, donnée à titre d'exemple, sans caractère limitatif, en regard des dessins annexés sur lesquels :
- la **figure 1** représente schématiquement un flanc d'un pneumatique et un motif faisant contraste par rapport à ce flanc ;
- la **figure 2** représente une vue de détail du motif de la figure 1 ;
- la **figure 3** représente une vue en perspective d'un premier exemple de réalisation du motif de la figure 1 ;
- la **figure 4** représente une vue en perspective d'un second exemple de réalisation du motif de la figure 1 ;
- la **figure 5** représente une vue en coupe d'une partie d'un moule apte à mouler le motif de la figure 1.

Dans la description qui va suivre, des éléments sensiblement identiques ou similaires seront désignés par des références identiques.

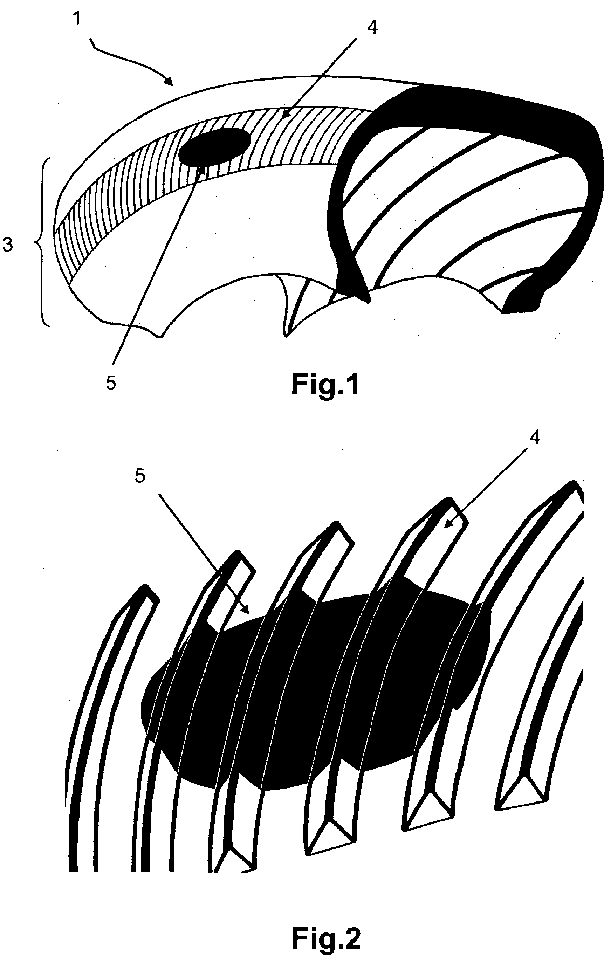

La **figure 1** est une vue partielle d'un pneumatique 1 conformément à l'invention. Plus particulièrement, la **figure 1** représente un flanc 3 d'un pneumatique. Sur le flanc du pneumatique, on distingue une pluralité de nervures 4 parallèles entre elles et un motif 5. Par « nervure », on entend une surépaisseur faisant saillie à partir du flanc du pneumatique et dont la longueur est au moins égale à deux fois sa hauteur.

Les nervures 4 sont ici orientées sur le flanc selon une direction radiale.

Le flanc 3 présente un état de surface globalement lisse qui lui confère une grande capacité à réfléchir les rayons lumineux incidents. Ainsi dans des conditions courantes de luminosité, le flanc sera perçu par un observateur comme globalement brillant.

Le motif 5 a quant à lui un aspect noir et mat qui fait contraste avec le flanc 3.

La **figure 2** est un agrandissement du motif de la **figure 1****.** Sur cette **figure 2****,** on distingue nettement des nervures 4 traversant le motif 5. Par « nervures traversant le motif », on comprend que ces nervures s'étendent à l'intérieur du motif. Le motif 5 va alors suivre le relief formé par les nervures.

Dans le cas de la **figure 2****,** les nervures ne sont pas limitées au motif mais s'étendent au-delà de ce motif. En variante, il est possible de prévoir que les nervures s'étendent uniquement à l'intérieur du motif et ne s'étendent pas au-delà de ce motif.

On notera que les nervures sont ici parallèles et la distance entre deux nervures adjacentes est au plus égale à 10 mm. En variante, les nervures ne sont pas parallèles et les nervures peuvent se croiser à l'intérieur du motif Il est cependant important que la distance entre les nervures à l'intérieur du motif reste inférieure ou égale à 10 mm.

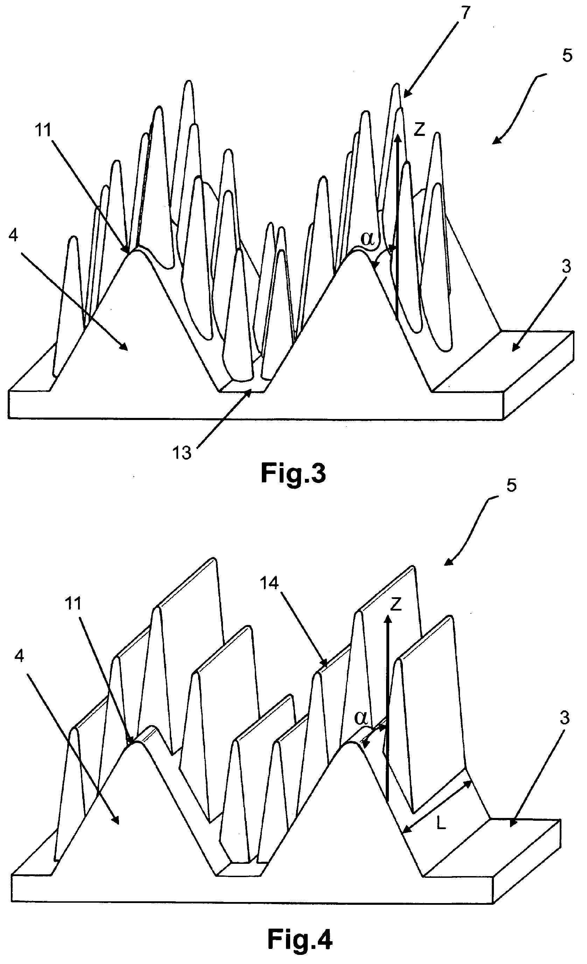

La **figure 3** est une vue en perspective d'un premier exemple de réalisation du motif 5 de la **figure 1****.**

Dans ce mode de réalisation, le motif 5 est formé par une pluralité de brins 7. Une partie de ces brins s'étend entre deux sommets 11 de deux nervures adjacentes 4. Plus particulièrement, des brins couvrent une surface résiduelle 13 délimitée par des bases des deux nervures adjacentes. Des brins couvrent également les parois latérales des nervures. En effet, chaque nervure comporte deux parois latérales s'étendant de part et d'autre de leur sommet 11. Les parois latérales des nervures 4 sont, par exemple, inclinées d'un angle α compris en valeur absolue entre 30° et 60° avec une direction Z perpendiculaire au flanc. De cette manière, les parois des nervures lorsqu'elles ne sont pas couvertes par des brins, ont une faible capacité à « piéger » les rayons lumineux incidents. Ainsi, dans le cas où les nervures s'étendent tout autour de la circonférence du pneumatique comme dans l'exemple de la **figure 1****,** on s'assure que le motif fait bien contraste avec le flanc et particulièrement avec les zones du flanc couvertes par ces nervures.

On notera que la hauteur des brins dans le motif est au moins égale à 0,1 mm et la hauteur des nervures dans le motif est comprise entre 0,25 mm et 1 mm. En fonction des hauteurs sélectionnées pour les brins et les nervures et de la position des brins par rapport aux sommets des nervures, il est possible que des extrémités de brins s'étendent au-delà des sommets de ces nervures.

On notera également que les brins présentent ici une forme globalement conique.

La **figure 4** est une vue en perspective d'un second exemple de réalisation du motif 5 de la **figure 1****.**

Dans cet exemple, les brins du motif sont remplacés par des lamelles 14 dont la largeur moyenne est inférieure à la largeur moyenne des nervures 4. La largeur moyenne des lamelles dans le motif est ainsi comprise entre 0,03 et 0,10 mm et la largeur moyenne des nervures dans le motif est au moins égale à 0,20 mm. Par « largeur moyenne » d'une nervure, respectivement d'une lamelle, on entend la moyenne des largeurs mesurées à intervalles réguliers depuis le pied de la nervure, respectivement de la lamelle, jusqu'à la tête, la largeur d'une nervure, respectivement d'une lamelle, correspondant à la distance mesurée entre deux parois latérales de cette nervure, respectivement de cette lamelle.

De plus, la hauteur des lamelles dans le motif est au moins égale à 0,1 mm et la hauteur des nervures dans le motif est comprise entre 0,25 mm et 1 mm.

Les lamelles sont ici représentées comme étant parallèles aux nervures. En variante, les lamelles peuvent former un angle non nul avec la direction d'extension des nervures. Par exemple, les lamelles peuvent être orthogonales à la direction d'extension de ces nervures.

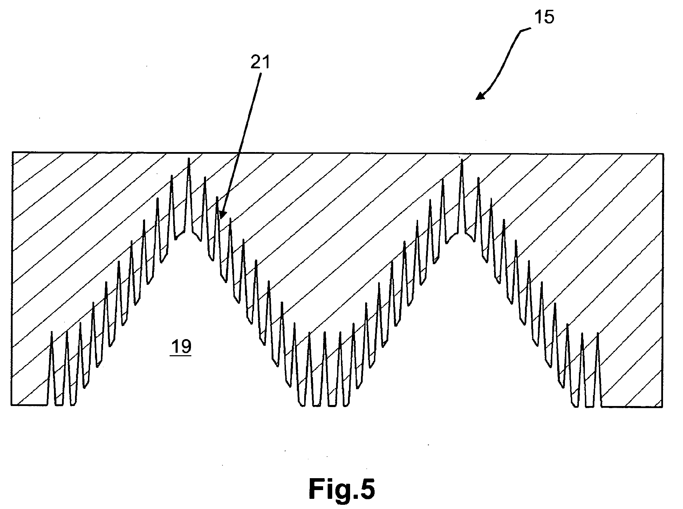

La **figure 5** est une vue en coupe d'une partie d'un moule apte à mouler le motif 5 de la **figure 1****.** Plus particulièrement, cette partie du moule correspond à une partie d'une coquille 15 apte à mouler le flanc d'un pneumatique.

La coquille 15 comprend une surface de moulage d'une pluralité de stries 19. Les stries 19 sont aptes à mouler des nervures du motif 5. Chaque strie 19 s'étend dans la profondeur de la coquille. La coquille 15 comporte également un ensemble de découpures 21 débouchant sur la surface de moulage entre deux stries 19 adjacentes. Les découpures 21 sont par exemple des cavités aptes à mouler les brins du motif 5 de la **figure 3****.** Ces cavités peuvent alors avoir une forme globalement conique.

En variante, les découpures 21 sont des incisions aptes à mouler les lamelles du motif 5 de la **figure 4****.**

Les découpures 21 sont réalisées par gravure au laser. Plus précisément, les découpures 21 sont réalisées à l'aide d'un laser par passes successives, chaque passe ayant pour effet d'éroder le métal du moule sur une surface et dans une profondeur donnée. A titre d'exemple, on utilise un laser à impulsions de la marque IPG avec une puissance de 50 W pour former ces découpures. Avec une telle opération de gravure au laser, il est possible de réaliser un marquage dans la coquille qui suit le relief formé par les stries 19.

L'invention n'est pas limitée aux exemples décrits et représentés et diverses modifications peuvent y être apportées sans sortir de son cadre.

Par exemple il est possible que les bases des nervures soient en contact entre elles. Dans ce cas, il n'y a pas de surfaces résiduelles entre les nervures. Les brins du motif, respectivement les lamelles du motif, présent(e)s entre les nervures font alors saillie uniquement à partir des parois des nervures.

## Revendications

1. Pneumatique en matériau caoutchoutique comprenant un flanc (3) sur lequel est formé au moins un motif (5) faisant contraste par rapport audit flanc, ledit motif comportant une pluralité de brins (7) répartis dans le motif selon une densité au moins égale à cinq brins par millimètre carré (mm²), chaque brin ayant une section moyenne comprise entre 0,003 mm² et 0,06 mm²**,** le pneumatique comportant sur ledit flanc au moins deux nervures (4) traversant le motif et entre lesquelles sont présents des brins du motif, lesdites nervures étant distantes l'une de l'autre d'au plus 10 mm, chaque nervure ayant une hauteur d'au moins 0,25 mm et une largeur moyenne d'au moins 0,20 mm, **charactérisé en ce que** ledit motif suit le relief formé par les nervures.

2. Pneumatique en matériau caoutchoutique comprenant un flanc (3) sur lequel est formé au moins un motif (5) faisant contraste par rapport audit flanc, ledit motif étant pourvu d'une pluralité de lamelles (14) sensiblement parallèles entre elles, le pas des lamelles dans le motif étant au plus égal à 0,5 mm, chaque lamelle ayant une largeur moyenne comprise entre 0,03 mm et 0,10 mm **caractérisé en ce que** le pneumatique comporte sur ledit flanc au moins deux nervures (4) traversant le motif et entre lesquelles sont présentes des lamelles du motif, lesdites nervures étant distantes l'une de l'autre d'au plus 10 mm, chaque nervure ayant une hauteur d'au moins 0,25 mm et une largeur moyenne d'au moins 0,20 mm, ledit motif suivant le relief formé par les nervures.

3. Pneumatique selon l'une quelconque des revendications 1 ou 2, **caractérisé en ce que** des extrémités de brins (7) du motif, respectivement de lamelles (14) du motif, s'étendent en hauteur au-delà des nervures (4).

4. Pneumatique selon l'une quelconque des revendications 1 à 3, **caractérisé en ce que** les nervures (4) ont des parois latérales inclinées faisant un angle (α) compris en valeur absolue entre 30° et 60° avec une direction (Z) perpendiculaire au flanc (3) et **en ce que** des brins (7), respectivement des lamelles (14) du motif, font saillie à partir desdites parois latérales principalement selon ladite direction perpendiculaire au flanc.

5. Pneumatique selon l'une quelconque des revendications 1 à 4, **caractérisé en ce que** les nervures (4) sont orientées sur le flanc selon une direction radiale.

## Patentansprüche

1. Reifen aus kautschukartigem Material, aufweisend eine Flanke (3) auf welcher mindestens ein Muster (5) ausgebildet ist, welches einen Kontrast in Bezug auf die Flanke bildet, wobei das Muster eine Vielzahl von Stängeln (7) aufweist, welche in dem Muster gemäß einer Dichte verteilt sind, welche mindestens gleich 5 Stängel pro Quadratmillimeter (mm²) ist, wobei jeder Stängel einen mittleren Querschnitt besitzt, welcher zwischen 0,003 mm² und 0,06 mm² liegt, wobei der Reifen auf seiner Flanke mindestens zwei Rippen (4) besitzt, welche durch das Muster verlaufen und zwischen denen Stängel des Musters vorhanden sind, wobei die Rippen zueinander mit höchstens 10 mm beabstandet sind, wobei jede Rippe eine Höhe von mindestens 0,25 mm und eine mittlere Breite von mindestens 0,20 mm besitzt, **dadurch gekennzeichnet, dass** das Muster dem von den Rippen gebildeten Relief folgt.

2. Reifen aus kautschukartigem Material, aufweisend eine Flanke (3) auf welcher mindestens ein Muster(5) ausgebildet ist, welches einen Kontrast in Bezug auf die Flanke bildet, wobei das Muster mit einer Vielzahl von Lamellen (14) versehen ist, welche im Wesentlichen parallel zueinander sind, wobei die Teilung der Lamellen in dem Muster höchstens gleich 0,5 mm beträgt, wobei jede Lamelle eine mittlere Breite besitzt, welche zwischen 0,03 mm und 0,10 mm liegt, **dadurch gekennzeichnet, dass** der Reifen auf seiner Flanke mindestens zwei Rippen (4) besitzt, welche durch das Muster verlaufen und zwischen denen Lamellen des Musters vorhanden sind, wobei die Rippen zueinander mit höchstens 10 mm beabstandet sind, wobei jede Rippe eine Höhe von mindestens 0,25 mm und eine mittlere Breite von mindestens 0,20 mm besitzt, wobei das Muster dem von den Rippen gebildeten Relief folgt.

3. Reifen nach einem der Ansprüche 1 oder 2, **dadurch gekennzeichnet, dass** Enden der Stängel (7) des Musters beziehungsweise der Lamellen (14) des Musters sich in der Höhe über die Rippen (4) hinaus erstrecken.

4. Reifen nach einem der Ansprüche 1 bis 3, **dadurch gekennzeichnet, dass** die Rippen (4) geneigte Seitenwände besitzen, welche mit einer Richtung (Z) senkrecht zur Flanke (3) einen Winkel (α) einschließen, der als Absolutwert zwischen 30° und 60° liegt, und dass Stängel (7) beziehungsweise Lamellen (14) des Musters von diesen Seitenwänden hauptsächlich gemäß der zur Flanke senkrechten Richtung vorspringen.

5. Reifen nach einem der Ansprüche 1 bis 4, **dadurch gekennzeichnet, dass** die Rippen (4) gemäß einer radialen Richtung auf der Flanke ausgerichtet sind.

## Claims

1. Tyre made of rubbery material comprising a sidewall (3) on which there is formed at least one pattern (5) that contrasts with the said sidewall, the said pattern comprising a plurality of strands (7) distributed through the pattern with a density of at least five strands per square millimetre (mm²), each strand having a mean cross section of between 0.003 mm² and 0.06 mm², the tyre comprising on the said sidewall at least two ribs (4) that pass through the pattern and between which strands of the pattern are present, the said ribs being distant from one another by at most 10 mm, each rib having a height of at least 0.25 mm and a mean width of at least 0.20 mm, **characterized in that** the said pattern follows the relief formed by the ribs.

2. Tyre made of rubbery material comprising a sidewall (3) on which there is formed at least one pattern (5) that contrasts with the said sidewall, the said pattern being provided with a plurality of substantially mutually parallel strips (14), the spacing of the strips in the pattern being at most equal to 0.5 mm, each strip having a mean width of between 0.03 mm and 0.10 mm, **characterized in that** the tyre comprises on the said sidewall at least two ribs (4) that pass through the pattern and between which strips of the pattern are present, the said ribs being distant from one another by at most 10 mm, each rib having a height of at least 0.25 mm and a mean width of at least 0.20 mm, the said pattern following the relief formed by the ribs.

3. Tyre according to either one of Claims 1 or 2, **characterized in that** ends of strands (7) of the pattern or respectively of strips (14) of the pattern extend heightwise beyond the ribs (4).

4. Tyre according to any one of Claims 1 to 3, **characterized in that** the ribs (4) have inclined lateral walls which, in terms of absolute value, make an angle (α) of between 30° and 60° with a direction (Z) perpendicular to the sidewall (3), and **in that** strands (7) or respectively strips (14) of the pattern project from the said lateral walls mainly in the said direction perpendicular to the sidewall.

5. Tyre according to any one of Claims 1 to 4, **characterized in that** the ribs (4) are oriented in a radial direction on the sidewall.
